# EUROPEAN PATENT APPLICATION

(11) **EP 1 260 467 A1**
(43) Date of publication of application: **27.11.2002**
(21) Application number: 02077011.1
(22) Date of filing: 22.05.2002
(51) Int. Cl.: B65G 47/76, B65G 47/84, B65G 47/53

(54) **Device for directing and deviating a package on a transporter**

(30) Priority: 23.05.2001 IT MI20011093
(71) Applicant: OCME S.r.l., 43100 Parma (IT)
(72) Inventor: Gatteschi, Emanuele, 43100 Parma (IT)
(74) Representative: Coppo, Alessandro

(57) **Abstract**

A device (10) for directing and deviating a package (14) on a transporter (12) with a belt or rollers, in which the packages (14) advance one after the other spaced apart, comprises at least one thruster (13), suitable for interacting with the packages (14) fed on the transporter (12), moved by respective displacement means (15) according to a trajectory which is inclined with respect to the advancing direction of the transporter (X) by an angle (α), which is not 90°, in which the linear advancing speed of the transporter (12) is equal to the component according to the advancing direction of the transporter (X) of the linear speed of the thruster (13).

## Description

The present invention refers to a device for directing and deviating a package on a transporter.

The goods moved on a transporter, for example consisting of cardboard, thermopacked bundles, crates, packages in general or other, must necessarily be directed during transportation into the optimal position for the subsequent treatment stations.

Moreover, the possibility of selectively deviating part of the goods fed towards the transversal arms of the transporter may need to be foreseen.

The traditional systems used to rotate or deviate packages on a transporter foresee the use of fixed obstacles, which the packages meet during conveyance and which, possibly with the help of rotation accelerators, guide and force the packages to carry out a 90° rotation or a deviation at a right angle with respect to the transporter.

The main limit of such solutions can be put down to the collisions which the packages undergo against the fixed obstacles.

Moreover, the control of the speed is difficult to optimise.

The purpose of the present invention is that of realising a directing and deviating device for a transporter which avoids collisions between the packages and a fixed obstacle.

Other purpose of the present invention is that of realising an automated device, which is not in the least bulky.

Another purpose of the present invention is that of realising a directing and deviating device for a transporter which is particularly simple and functional, with contained costs.

These purposes according to the present invention are achieved by realising a directing and deviating device for a transporter as outlined in claim 1.

Further characteristics are foreseen in the dependent claims.

The characteristics and advantages of a directing and deviating device for a transporter according to the present invention shall become clearer from the following description, given as an example and not for limiting purposes, referring to the attached schematic drawings in which:

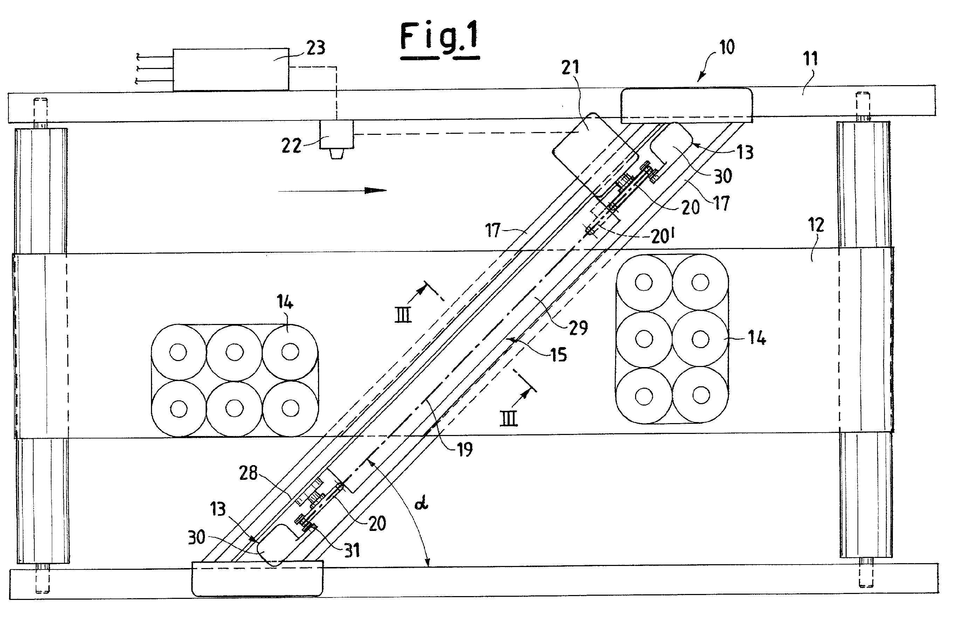

- figure 1 is a plan view of a device for directing and deviating a package on a transporter, object of the present invention;
- figure 2 is a section view along the axis of the chain of the device of figure 1;
- figure 3 is an enlarged detail of a section of the device 10 of figure 1 according to the line III-III, with a thruster in vertical position;
- figure 4 schematically shows the device of figure 1 during a directing operation of a package;
- figure 5 schematically shows the device of figure 1 during a deviation operation of a package;
- figure 6 schematically shows the use of the device object of the present invention for deviating different types of package in dedicated lines.

With reference to the figures, a device for directing and deviating a package 14 on a transporter 12 is shown wholly indicated with 10, comprising at least one thruster 13, moved by displacement means 15. The thruster 13 is suitable for interacting with packages 14, fed one after the other spaced apart, on said transporter 12. The trajectory of the thruster 13 is inclined by an angle α, which is not 90°, in particular about 45°, with respect to the advancing direction X of the transporter in a plane 18. The trajectory defines two distinct portions of the transporter 12, respectively upstream 12a and downstream 12b of the device 10.

The transporter 12, mounted on a frame structure 11, is of the flexible type, made up of a belt made of plastic material and/or made with links, or alternatively can consist of motorised rollers with a short pitch.

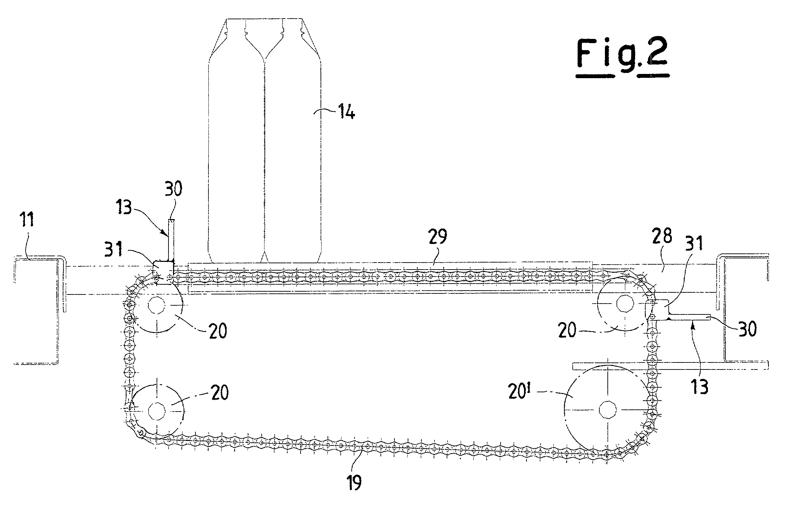

The displacement means 15 for the thruster 13 are described hereafter and are shown in figure 2 as a nonlimiting example with respect to other alternative solutions which are known and commonly used by the man skilled in the art.

The displacement means 15 consist, for example, of a chain 19 arranged as a closed loop on four sprockets 20, amongst which, for example, there is a driving gear with a large diameter 20', actuated by a motor 21, schematised in figure 2.

The chain 19 carries a thruster 13 on it which protrudes vertically with respect to the plane 18 of the transporter to interact in a suitable manner with the packages which are fed. The chain 19 is thus directed according to the same trajectory as said at least one thruster 13, in other words inclined by the angle α with respect to the direction X.

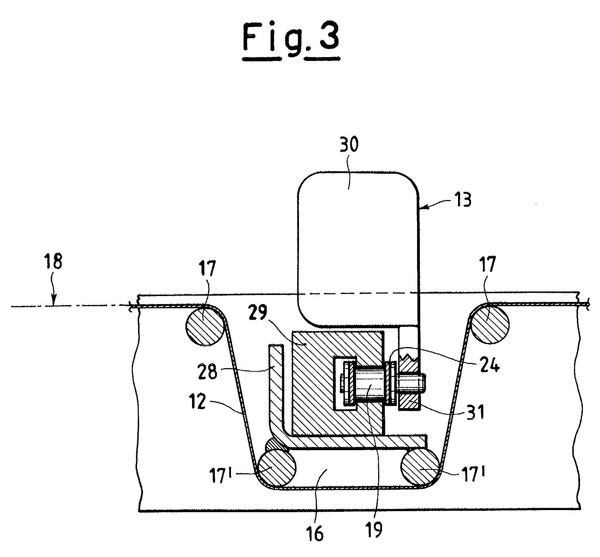

In the proposed embodiment, shown in the figures as an example, the transporter 12 is of the belt type and forms a housing space 16 for the displacement means 15, being deviated with respect to the feeding plane 18, through rollers or similar deviator elements 17 and 17' parallel to each other and clamped to the frame 11. In figure 3 two upper rollers 17, belonging to the feeding plane 18, and two lower rollers 17' arranged in an underlying plane are shown.

The space 16 and the rollers 17 and 17' which define it are thus arranged inclined by the same angle α, in accordance with the trajectory of the thruster 13.

The rollers 17' are clamped to an overlying support 28, which in the example is L-shaped and which is also clamped to the frame 11 in a position parallel to the trajectory of the thruster 13, and upon which rests a guide 29 for the chain, realised in polyethylene or another plastic material.

The guide 29 embraces the horizontal upper portion of the path of the chain 19 and is situated below the feeding plane 18, so as not to be an obstacle to the advance of the packages 14.

As shown in the detail of figure 3, the guide 29 has a T-shaped hollow, in which the chain 19 is partially housed, having to leave a side 24 thereof without constraints, upon which the thruster 13 is applied.

Indeed, in the proposed example, the thruster 13 is made up of a contact surface 30 for interacting with the packages 14 and of an arm 31 for connecting with the side 24 of the chain 19, which extends beyond the vertical volume of the guide 29.

During the working stroke of the device 10, the contact surface 30 of the thruster 13 extends beyond the feeding plane 18 and advances, at a suitable speed, according to a trajectory inclined by an angle α with respect to the advancing direction X of the transporter 12.

Upstream of the thruster 13 a sensor 22 is arranged, which detects the passage of the packages 14 and sends a signal to a processing and control unit 23. With the help of a photocell it is possible, for example, to identify a characterising element of the package, such as the colour, the barcode, the size and the shape, or else the packages can be counted as they go through.

Moreover, signals arrive at the processing and control unit 23 from other apparatuses, not shown, arranged upstream or downstream of the directing and deviating device 10 itself. For example there can be an apparatus for checking weight or a labelling machine upstream and a palletiser downstream.

The packages fed on the transporter 12 can be arranged on the incoming portion of transporter 12a in a non-optimal manner for the subsequent packaging stations. Moreover, the packages can be different from each other and very variable according to the type of goods.

The unit 23 processes the incoming signals and commands the intermittent operation of the displacement means 15. Indeed, the thruster 13 must cross the transporter 12 only when a directing operation or else a deviation operation of the package 14 is necessary.

The point of contact 25 of the thruster on the package is controlled by the unit 23 and depends upon the type of operation to be carried out.

The directing and deviating device for a transporter 10, thus conceived, is susceptible to numerous modifications and variants, all covered by the invention; moreover, all of the details can be replaced by technically equivalent elements. In practice the materials used, as well as the sizes, can be whatever according to the technical requirements.

For example, said displacement means 15 of the thruster 13 could, in a further non-shown embodiment, consist of a linear actuator, also housed in the space 16.

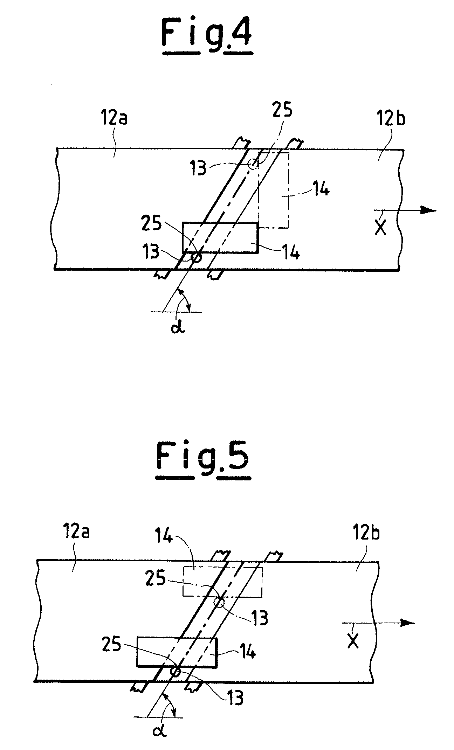

The operation of the directing and deviating device for a transporter 10 foresees that a package 14, fed on the transporter portion 12a following the intervention of the thruster 13, proceeds on the portion 12b rotated by 90° (figure 4) or deviated parallel to itself (figure 5).

The advancing speed of the packages on the transporter 12, as well as of the thruster 13 carried by the chain 19 are chosen with a precise relationship depending upon the angle of inclination α of the trajectory of the thruster 13. To be precise the linear advancing speed of the transporter 12 is equal to the linear component of the speed of the thruster 13 according to the advancing direction X of the transporter. In this way it is ensured that the thruster 13 keeps the same point of contact with the package during the directing and deviating operations.

If the point of contact 25 is arranged near to the rear end of the package the distribution of the thrusting and friction forces leads to a rotating operation, as schematically represented with a broken line in figure 4.

On the other hand, to carry out a deviation of the package into a parallel position, represented in figure 5 with a broken line, the thrust must take place on a point of contact 25 arranged in the midpoint.

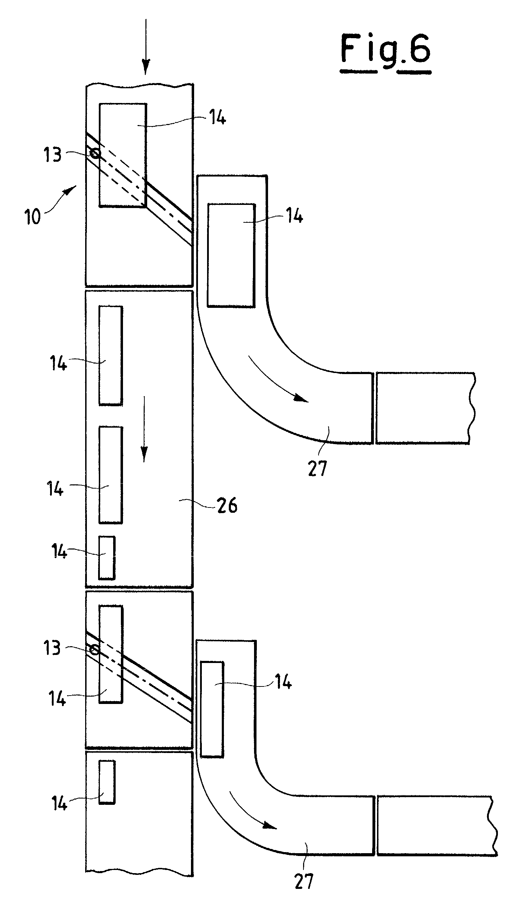

Figure 6 shows an example of application of the device 10, object of the present invention, to a transportation collector 26 on which the different types of packages to be deviated on dedicated lines 27 transit.

In the example shown, many devices 10 are arranged in series on portions of the collector 26 and each of them displaces the packages having the same characteristics parallel to themselves on a flanking transporter 27.

The directing and deviating device for a transporter object of the present invention has the advantage of not causing violent collisions of the packages fed on the transporter against the fixed obstacles.

Moreover, by means of the device 10 it is advantageously possible to carry out both directing operations and deviation operations of the packages.

## Claims

1. Device (10) for directing and deviating a package (14) on a transporter (12), in which the packages (14) advance one after the other spaced apart, **characterised in that** it comprises at least one thruster (13), suitable for interacting with said packages (14) fed on said transporter (12), moved by respective displacement means (15) according to a trajectory which is inclined with respect to the advancing direction of the transporter (X) by an angle (α), which is not 90°, in which the linear advancing speed of the transporter (12) is equal to the component according to the advancing direction of the transporter (X) of the linear speed of said at least one thruster (13).

2. Device according to claim 1, **characterised in that** said displacement means (15) consist of a chain (19) arranged in a closed loop on four sprockets (20), and actuated by a motor (21), where said chain (19) carries said at least one thruster (13) on it.

3. Device according to claim 1, **characterised in that** said transporter (12) is a belt which is deviated with respect to a feeding plane (18) on deviator elements (17 and 17') to form a housing space (16) for said displacement means (15).

4. Device according to claim 1, **characterised in that** said transporter (12) consists of motorised rollers with a short pitch.

5. Device according to claim 2, **characterised in that**, in a horizontal upper portion of said closed loop, said chain (19) can slide in a guide (29).

6. Device according to claim 5, **characterised in that** said guide (29) made of polyethylene or another plastic material has a T-shaped hollow, which partially encloses said chain (19).

7. Device according to claim 1, **characterised in that** said at least one thruster (13) is made up of a contact surface (30) for interaction with the packages (14) and of an arm (31) for connecting to said displacement means (15).

8. Device according to claim 1, **characterised in that** said displacement means (15) consist of a linear actuator.

9. Device according to claim 1, **characterised in that** it is equipped with a sensor (22) arranged upstream of said at least one thruster (13).

10. Device according to claim 1, **characterised in that** it is equipped with a processing and command unit (23) which regulates the operation of said displacement means (15).

11. Device according to claim 10, **characterised in that** said unit (23) controls the position of the point of contact (25) of the thruster (13) on said package (14) fed on the transporter (12).
